# EUROPEAN PATENT APPLICATION

(11) **EP 4 257 460 A1**
(43) Date of publication of application: **11.10.2023**
(21) Application number: 23164731.4
(22) Date of filing: 28.03.2023
(51) Int. Cl.: B62D 37/00, B62D 49/06, B62D 55/06, B62D 55/084

(54) **MECHANISM FOR VARYING THE TRACK GAUGE AND THE CENTER OF GRAVITY OF TRACKED VEHICLES**

(30) Priority: 05.04.2022 IT 202200001382 U
(71) Applicant: Romboli, Roberto, 47121 Forlì FC (IT)
(72) Inventor: Romboli, Roberto, 47121 Forlì FC (IT)
(74) Representative: Modiano, Micaela Nadia

(57) **Abstract**

A mechanism for varying the track gauge and the center of gravity of tracked vehicles, in particular of vehicles, whether radio-controlled or not, intended to operate even on steeply sloping terrains and with a front shredder or other work implements however arranged, comprising two twin mirror-symmetrical articulated parallelograms having, as fixed linkages, two parallel sides (M) of a rigid frame (D) of the undercarriage of the tracked vehicle and, as movable linkages, two tracks (A) of the tracked vehicle, so that simultaneous and symmetrical deformations of the parallelograms concurrently change the track gauge and the longitudinal footprint of the tracked vehicle, producing a shift of the center of gravity of the tracked vehicle in order to improve its stability and maneuverability.

## Description

The present invention relates to a mechanism for varying the track gauge and the center of gravity of tracked vehicles. More particularly, the invention, conceived initially for a radio-controlled tracked machine with a front shredder for mowing grass on any type of terrain, has turned out to be particularly suitable for any tracked machine, radio-controlled or not, equipped in any way and intended to operate even on steeply sloping terrains.

In existing tracked vehicles with variable track gauge, variation is achieved by means of the intervention of at least one hydraulic cylinder on each side and the lateral extension of the arms bearing each of the two tracks.

In some embodiments, separate and different lateral shift of the two tracks allows transverse leveling of the vehicle on uneven terrains.

In any case, to vary the track gauge of tracked vehicles that allow this, the two tracks undergo a simple lateral shift that moves them apart or closer together as needed.

However, since the working tool, be it a shredder or other, is mounted on the front of the tracked vehicle, the mere transverse widening of the track gauge cannot be sufficient to enable it to operate, on steeply sloping terrains, with the necessary safety.

Therefore, the aim of the present invention is to provide a mechanism for varying the track gauge and center of gravity of tracked vehicles, since this is decisive in giving tracked vehicles their indispensable balance and stability.

Within this aim, an object of the invention is to provide a mechanism for varying the track gauge and center of gravity of tracked vehicles that allows, during track gauge widening, to reduce the longitudinal footprint of the tracked vehicle for better maneuverability thereof.

This aim and this and other objects which will become better apparent hereinafter are achieved by a mechanism for varying the track gauge and center of gravity of tracked vehicles according to claim 1.

Further characteristics and advantages of the invention will become better apparent from the description of an embodiment of the invention, illustrated by way of non-limiting example in the accompanying drawings, wherein:
Figure 1 is a view of the mechanism according to the present invention applied to a tracked vehicle in travel configuration;
Figure 2 is a view of the mechanism according to the present invention applied to a tracked vehicle in the work configuration.

Tracked vehicles generally comprise an undercarriage (constituted by the lower portion of the tracked vehicle provided with tracks) topped by a work stage provided with means adapted to perform predefined processes (mowing vegetation, earthmoving, agricultural operations, transport, etc.). The mechanism according to the invention is applicable to an undercarriage of a tracked vehicle to improve its stability and safety.

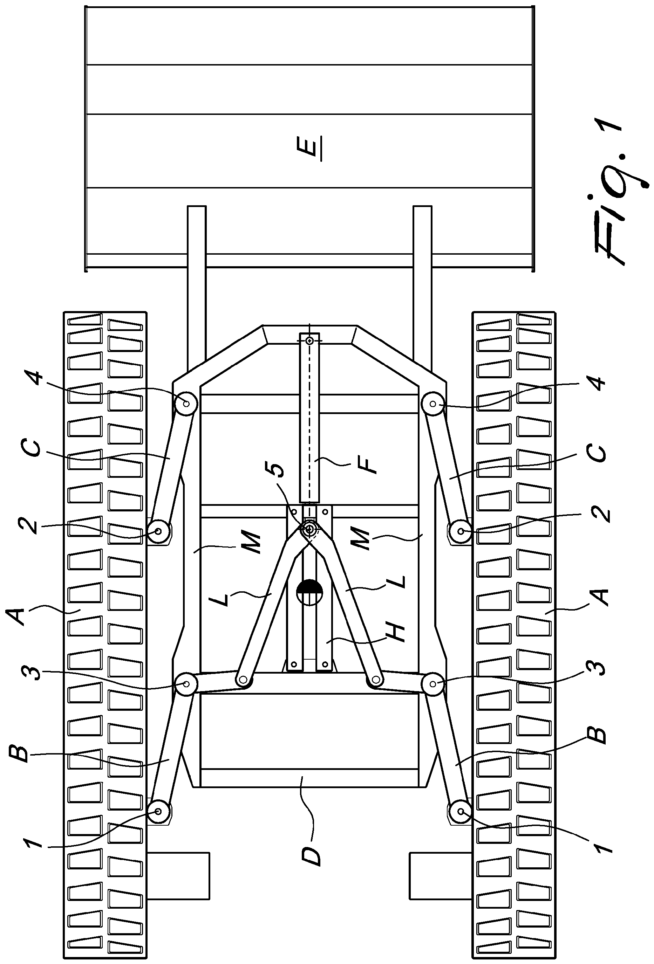

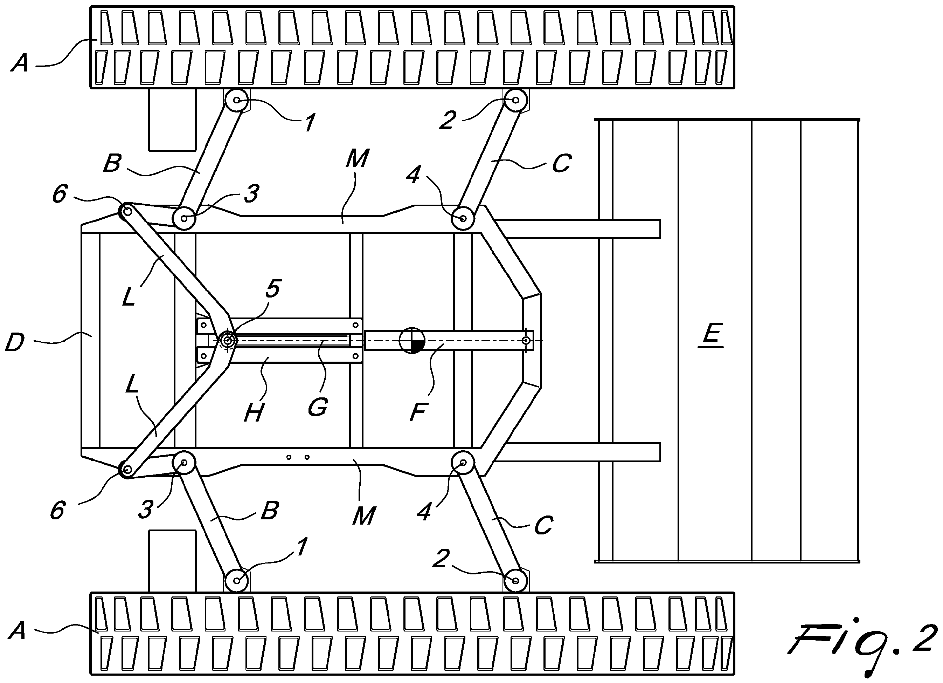

In particular, the new tracked undercarriage that can be widened, and therefore is provided with the mechanism for varying the track gauge and center of gravity of tracked vehicles according to the invention, here complete with front shredder (i.e., an apparatus assigned to cutting and shredding grass, shrubs, and branches present on the ground), is shown in the travel configuration in Figure 1 and in the work configuration in Figure 2.

This mechanism according to the invention comprises two identical and mirror-symmetrical articulated parallelograms, whose simultaneous and symmetrical deformations (understood as the movements of the levers that constitute the parallelogram with respect to the respective articulation points) concurrently change the track gauge (i.e., the mutual distance that can be measured between mutually opposite tracks of the tracked vehicle) and the length of the entire tracked vehicle.

This occurs because each of the two tracks A, like a linkage, is connected by the hinges 1 and 2 to the cranks B (which are elbow-shaped and hinged to the frame of the undercarriage at the vertex of the two linear portions that form said elbow) and C, which in turn are connected, by the hinges 3 and 4, to one of the two parallel sides M of the rigid frame D from which the supporting arms of the front shredder E extend.

A hydraulic cylinder F and a slotted guide or slot link H of a slider 5 are supported along the longitudinal axis of the rigid frame D and a piston G of the cylinder F acts by means of said slider on respective two linkages L which are pivoted to one end thereof and are connected, by means of two hinges 6, to the elbow-shaped cranks B of the two articulated parallelograms.

Consequently, the movements of the piston G and of the linkages L pivoted therein impose on the cranks B simultaneous and mutually opposite rotations, which force the tracks A to change their configuration and shift from the one of Figure 1 to the one of Figure 2 and vice versa (and/or to any intermediate configuration).

Obviously, the simultaneous and mutually opposite rotations of the two cranks B, assisted by the cranks C, concurrently change the track gauge and also the longitudinal footprint of the entire tracked vehicle.

In particular, during track gauge widening the tracks A shift and the center of gravity also shifts along the longitudinal direction, preferably toward the portion of the tracked vehicle that is equipped with the work implement E, with a consequent better stability and maneuverability of the machine, especially when operating on steeply sloping terrains.

All this regardless of whether the work implement E is mounted on the front or the rear of the tracked vehicle and whether the two articulated parallelograms are consequently arranged and moved to widen the track gauge by proceeding toward the front portion or toward the rear portion of the tracked vehicle.

The invention thus conceived is susceptible of numerous modifications and variations, all of which are within the scope of the accompanying claims. These variations, not shown and described, may relate to the hydraulic cylinder F and are in any case comprised within the scope of the accompanying claims.

The disclosures in Italian Utility Model Patent Application No. 202022000001382, from which this application claims priority, are incorporated herein by reference.

Where technical features mentioned in the claims are followed by reference signs, those reference signs have been included for the sole purpose of increasing the intelligibility of the claims and accordingly such reference signs do not have any limiting effect on the interpretation of each element identified by way of example by such reference signs.

## Claims

1. A mechanism for varying the track gauge and the center of gravity of tracked vehicles, in particular of vehicles, whether radio-controlled or not, intended to operate even on steeply sloping terrains and with a front shredder or other work implements however arranged, **characterized in that** it comprises two twin mirror-symmetrical articulated parallelograms having, as fixed linkages, two parallel sides (M) of a rigid frame (D) of the undercarriage of the tracked vehicle and, as movable linkages, two tracks (A) of the tracked vehicle, so that simultaneous and symmetrical deformations of said articulated parallelograms concurrently change the track gauge and the longitudinal footprint of the tracked vehicle, producing a shift of the center of gravity of the tracked vehicle in order to improve its stability and maneuverability.

2. The mechanism for varying the track gauge and the center of gravity of tracked vehicles according to claim 1, **characterized in that** a slot link or slotted guide (H) is supported along the longitudinal central axis of the rigid frame (D) for linear translations of a slider (5) by means of which the piston (G) of a hydraulic cylinder (F), or other suitable means having a reciprocating motion, acts against the foot of two twin linkages (L) which are pivoted at the head, i.e., at one end, to respective two cranks (B), which have an angular shape and to which simultaneous and mutually opposite rotations are to be imparted by means of which changes in shape are imposed on the two articulated parallelograms, modifying the configuration of the two tracks (A), i.e., their mutual distance in a transverse direction and their position in a longitudinal direction with respect to the undercarriage.

3. The mechanism for varying the track gauge and the center of gravity of tracked vehicles according to one or more of the preceding claims, **characterized in that** in order to ensure on steep terrains greater stability and better maneuverability of the tracked vehicle, the entire mechanism is always arranged so that the widening of the track gauge takes place by moving the tracks (A) and the center of gravity toward a work implement (E), regardless of the location of said work implement either on the front portion or on the rear portion of the tracked vehicle.

4. A tracked vehicle, **characterized in that** it comprises a mechanism according to one or more of the preceding claims.
